# EUROPEAN PATENT APPLICATION

(11) **EP 4 622 058 A1**
(43) Date of publication of application: **24.09.2025**
(21) Application number: 25164870.5
(22) Date of filing: 19.03.2025
(51) Int. Cl.: H02J 13/00

(54) **WELFARE CABIN CONTROL SYSTEM**

(30) Priority: 19.03.2024 GB 202403942
(71) Applicant: Boss Cabins Limited, Bourne Lincolnshire PE10 9HT (GB)
(72) Inventor: KEARSEY, James, PE10 9HT Bourne (GB)
(74) Representative: Adamson Jones

(57) **Abstract**

There is disclosed a self-contained welfare cabin having an electrical system with a bespoke user interface. The electrical system has an energy store, an electrical energy generator and a plurality of appliances connected to the electrical system to be powered in use by the energy store and/or electrical energy generator. A control system is arranged to selectively deny power to one or more appliance based on a predetermined control scheme, e.g. when the electrical demand of the appliances is greater than the supply by the energy store and/or generator. A user interface onboard the welfare cabin has a display and an input device for specifying a desired power delivery status for one or more of the appliances, wherein the control system outputs to the user interface details of the one or more appliance being denied power by the control system and the display displays said details to a user. The user interface may take the form of a touchscreen device through which a user can specify an appliance to be used and the control system can return a power denied or power supplied status for one or more appliance on the display.

## Description

The present invention relates to a welfare cabin, particularly, but not limited to a self-contained, free standing welfare cabins. Such cabins are often used in remote locations or worksites where mains power and/or sewerage connections are unavailable.

Traditionally welfare cabins are supplied with an integral generator set, i.e. a diesel engine generator, to supply off-grid power to electrical appliances within the cabin. There is an ongoing desire to reduce emissions from combustion engines and to find cleaner alternatives for meeting electrical demands. However the electrical system demands for a welfare cabin can vary significantly, meaning that a peak demand can very quickly outstrip the available renewable power and/or any energy reserves. Conventional renewable energy generators (i.e. solar and wind generators) that can be provided in a practical manner on-board a welfare cabin would fail to cope with even a moderate instantaneous electrical system demand.

European Patent EP 1 716 298 discloses certain problems with the use of diesel generators in self-contained cabins, such as noise, fuel consumption and exhaust fumes. As a solution EP 1 716 298 proposes a self-contained lavatory cabin with a solar panel to power electric lights and a burner and heat-exchanger arrangement for air heating in the cabin. The hot air can be used for heating the cabin interior and to heat water for storage in a hot water tank. Simple controls are enabled using an air temperature sensor and an infra-red sensor to detect a person within the cabin. The lights and other electrical components are activated in a stand-by mode when a person is present and air heating is initiated if the internal cabin temperature is below a threshold temperature.

The water closet example of EP 1 716 298 represents a relatively low-energy-consumption unit. Larger welfare cabins have greater energy demands for space heating, water heating, lighting, cooking and powering ancillary electrical appliances. A peak energy demand of a welfare cabin will drain a conventional on-board battery system very quickly to the point that the cabin will be without power for a majority of the usage time, unless a significantly larger battery system is installed. This is impractical for a number of reasons, as well as being costly. Even then, a moderate power consumption for a welfare cabin will typically outstrip a renewable energy generation capacity of the cabin and so, regardless of battery system size, the battery will ultimately run down if power is consumed in the cabin in a conventional manner.

Therefore, it has been previously proposed to provide an onboard control system that can limit the use of certain equipment onboard the welfare cabin as well as manage the onboard power needs with the available power onboard the cabin (e.g. based on battery charge level). An example of such a system is described in the applicant's earlier patent application, GB2579879, which discloses how such a control system can limit the extent to which alternative, non-renewable energy sources are used to meet the onboard power demands.

However, it has been determined by the applicant that certain issues can arise during occupation of welfare cabins with sophisticated control systems of this type. For example, the control system may actively deny power to an appliance that a user is attempting to use in order to prioritise power to another appliance or simply to conserve energy. However, the user may infer that the appliance is not working or may not understand the conditions under which power has been denied. Therefore the need to improve the energy efficiency of a welfare cabin can conflict with the occupant's desired use of the cabin.

It is an aim of the invention to provide an improved self-contained cabin that resolves or mitigates one more of the above identified problems.

According to a first aspect of the invention, there is provided a self-contained welfare cabin having an electrical system comprising: an energy store; an electrical energy generator; a plurality of appliances connected to the electrical system to be powered in use by the energy store and/or electrical energy generator; a control system arranged to selectively deny power to one or more appliance based on a predetermined control scheme; and, a user interface onboard the welfare cabin, the user interface comprising a display and an input device for specifying a desired power delivery status for one or more of the appliances, wherein the control system outputs to the user interface details of the one or more appliance being denied power by the control system and the display displays said details to a user.

The display may present said information/details to a user upon interaction with the input device.

The user interface may be provided as a user console. The user interface may comprise a touchscreen display, e.g. wherein the user can interact with the display such that the display, or a portion thereof, acts as the input device. The display may output an indication of one or more appliance on screen and the user may interact with said indication to specify a desired power delivery status for said appliance. The user may specify a power on or power off status for one or more of the appliances using the user interface.

The display may output a power denied or power supplied status for one or more appliance, e.g. for a plurality or all appliances. The display may output an active or inactive status for one or more appliance, e.g. for a plurality or all devices. The display may output a status or condition for a plurality, or all, of the devices either individually or collectively.

The control system may communicate to the user interface one or more condition associated with the status of the one or more appliance. The condition may be a condition of the predetermined control scheme/logic. The condition may comprise one or more of a current power demand for the electrical system (e.g. a total current/instantaneous power demand for all active appliances onboard); a charge status or power capacity of the energy store; a total power threshold; an active or inactive status of one or more further appliance; a predicted power threshold; a timer or time of day; one or more ambient condition (e.g. temperature, light, etc); an occupancy status of the cabin.

The user interface may present the status of an appliance selected by the user and also one or more condition associated with that status. This is particularly beneficial in helping the user understand the status and what steps could be taken by the user to alter the status.

The control scheme may comprise a hierarchy of appliances. For example, when total power drawn by the electrical system is limited or capped, the controller may refer to the hierarchy to determine which appliance takes precedence over which other appliance for supply of power.

Each appliance may be assigned a priority rating. The priority rating of each appliance may be logged/predetermined and accessible to the controller. Power may be denied to a plurality of appliances. One or more appliance may be denied power in accordance with its priority rating. The priority rating may be a hierarchical rating, e.g. where each appliance has a rating according to a predetermined hierarchy applied by the controller.

The plurality of appliances may comprise one or more appliance selectively operable in response to a power demand specified via the user interface and one or more further appliance which cannot be operated by the user interface, operation of said one or more further device being controlled by the control system.

The control system may comprise one or more sensor to determine a condition associated with one or more appliance status. For example, a sensor may be configured to determine any, any combination or all of: occupancy of the cabin; activation of one or more appliance; internal/external temperature; time of day; date; renewable energy generation/power level; charge state/level of the energy store; total active power demand; ambient light; water temperature; water flow or water tank level.

The user may specify a desired active or inactive power delivery status for the appliance via the user interface. That is to say, the user interface may act like a power switch or toggle for the/each appliance. The user interface may return a status of the device when the user interacts with the user interface. That is to say the control system may or may not alter the status of an appliance based on the user's interaction with the input device, dependent on any conditions associated with the appliance. The controller may or may not switch an appliance on/off based on the user input via the user interface.

The electrical system may have an alternating current (AC) circuit and a direct current (DC) circuit, and an inverter operatively connected to the energy store (e.g. on the DC circuit) and configured to provide AC power to the AC circuit. The plurality of appliances may be operatively connected to the AC and/or DC circuits. The control system may selectively deny power to appliances on the AC circuit.

The renewable energy generator may comprise one or more solar panel. Said solar panel(s) may be operatively connected to the electrical system for charging the energy store.

The controller may be arranged to control the supply of power to the appliances in response to selection of an appliance by a user via the user interface. The controller may selectively deny power to one or more appliance in contradiction to a user selection of power delivery to an applicant via the user interface.

The welfare cabin being devoid of a combustion generator or may comprise a combustion generator in addition to the renewable energy generator.

All or substantially all of the power consumed by the cabin in use may be supplied by the energy store and/or solar panels. At least 80%, 90%, 95%, 97% or more of the power consumed by the welfare cabin when on site may be supplied by the energy store and/or solar panels.

The controller may monitor the charge level on the energy store and/or the rate of charge/discharge from the energy store. The controller may monitor the power demand, e.g. instantaneous power demand, of the appliances.

The controller may comprise a communication interface for operative communication with a remote device. The controller may be configured to receive commands from the remote device, e.g. to alter a status for one or more appliance and/or allow modification of one or more condition for operation of the appliance(s) by the controller.

The condition may comprise one or more threshold for generating an alert based on the operation of the energy generation system.

The welfare cabin may comprise a location determination system, and the controller may be configured to a receive a location parameter from the remote device, the controller determining whether or not the location of the welfare cabin is adheres to said parameter. The location parameter may be a location or geographic area/zone.

The energy generation system may comprise a backup power source configured to charge the battery when the charge thereof falls below a predetermined charge level and the controller may receive commands from the remote device to set or change the predetermined charge level.

The electrical system may comprise a temperature sensor and a heater. If the sensed temperature is outside a predetermined temperature range or threshold, the controller may alter the temperature until it is within said temperature range. Such heating may take control precedent over other appliances of the electrical system. The temperature may comprise a temperature of the energy store or air temperature of an area/enclosure inside the cabin, or water temperature.

Where a total power rating of the appliances is greater than the power rating of the inverter, the controller may selectively deny power to one or more appliance in the event the power drawn by active appliances is greater than the power rating of the inverter.

In any aspect of the invention, the welfare cabin may comprise one or more occupancy sensor. The controller may selectively operate or deny power to one or more appliance in dependence upon the occupancy sensor output/signal.

In any aspect of the invention, the controller may be configured to transmit a notification or data to the remote device, the data comprising one or more of: the energy store charge level and/or charging/discharging rate; power or total power generation of the combustion and/or renewable generator; a location of the cabin; whether one or more appliance has been deactivated in response to determination the cabin is unoccupied.

In any aspect of the invention, the system may comprise a temperature sensor for the welfare cabin interior. The controller may permit or deny operation of one or more appliance based on the sensed temperature. One or more temperature thresholds may be set or adjusted using the remote device.

The electrical appliance may comprise a water heater, air heater, cooking appliance (e.g. microwave), refrigerator, an actuator or drive, water pump, water treatment device (e.g. UV light), one or more light and/or an inverter.

The electrical system may comprise a communication interface for operative communication with a remote device, the control system configured to receive commands from the remote device to alter a status or condition for operation of the appliance(s).

Typically, the control system updates the status information for the one or more appliance sent to the user interface substantially in real time.

One or more appliance may be operable by a user without accessing the user interface, wherein the control system monitors the electrical system and updates the status information sent to the user interface for said one or more appliance.

The welfare cabin may comprise a liquid/water storage tank. The control system may update the status of one or more appliance based upon the volume of liquid in said storage tank The operating parameter used by the controller to permit/deny operation of an appliance may comprise a level/volume of liquid in the storage tank. The storage tank could comprise a waste water (e.g. grey or black water) tank, or a fresh/rain water tank. A command from the remote device could define a threshold liquid level/volume in the storage tank.

According to a second aspect of the invention there is provided a controller for a welfare cabin as recited in claim 15.

According to a further aspect of the invention, there is provided a data carrier such as a tangible data medium comprising machine readable instructions for the control of a welfare cabin controller, the data carrier comprising a control scheme for operation of the welfare cabin electrical system in accordance with the controller of the second aspect.

Practicable embodiments of the disclosure are described below in further detail, by way of example only, with reference to the accompanying drawings, of which:
**Figure 1** shows a schematic plan view of a water closet cabin layout;
**Figure 2** shows a plan view of a larger welfare cabin layout;
**Figure 3** shows an example schematic electrical system for a cabin;
**Figure 4** shows an example schematic of the control arrangement for a cabin;
**Figure 5** shows an example user interface for the control system of a cabin;
**Figures 6A-6D** show example screen displays for a user interface display.

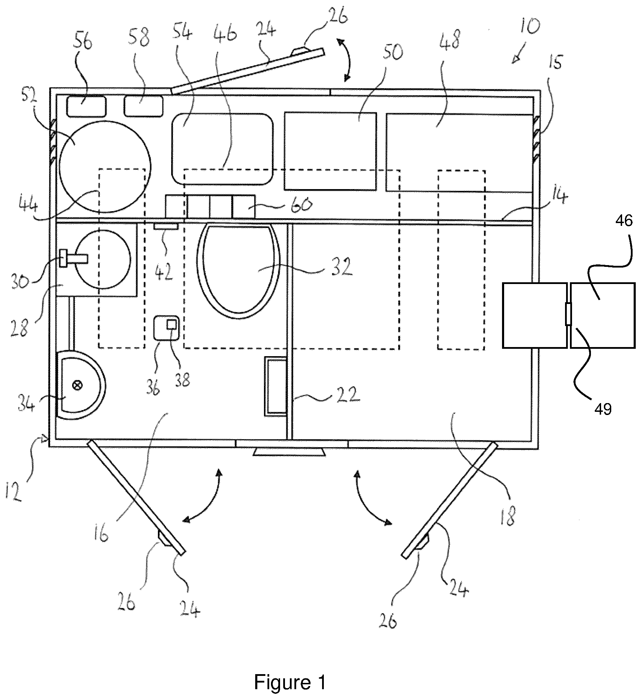

A free-standing welfare cabin according to an example of the present invention is shown schematically in Figure 1 and generally designated 10. The cabin can be provided in any suitable location, for example, in locations without connection to water or electricity mains.

The cabin comprises an outer wall 12 around its perimeter and one or more inner dividing wall 14, which separates the user compartment 16 from an equipment compartment 20.

The outer wall 12 provides for a rigid container that is resilient to vandalism. The outer wall may comprise one or more vents 15 to the cabin exterior in any, any combination, or all of the internal compartments.

In the present embodiment, the cabin 10 comprises a water closet (WC) cabin with two user compartments 16 and 18 in a side by side configuration, e.g. separated by a further internal dividing wall 22. However in other examples, a single user compartment 16 can be provided if required.

Each of the user compartments 16, 18 and equipment compartment 20 is provided with a door 24 that opens to the exterior of the cabin 10. The doors 24 each have locks 26 and are designed to be difficult to break into by way of their fitment into the corresponding frame in the outer wall 12, as well as by the nature of the lock 26.

The user compartment 18 may be a copy of the user compartment 16 and so the details of that compartment are not duplicated for simplicity. In other examples, the compartment 18 could comprise a washing compartment, e.g. instead of a WC compartment. The user compartment 16 comprises a sink 28 with a water dispenser 30 (e.g. a tap or hot wash unit) to provide hot or cold water and a toilet 32. The compartment may additionally comprise a urinal 34.

Electrical components within the user compartment comprise a light 36, personnel sensor 38 and, optionally, a heater 40. The personnel sensor 38 typically comprises a proximity sensor and/or movement sensor of a known type. An additional sensor 42 is provided in the cabin in the form of a light sensor. The light sensor senses the level of ambient light within the compartment 16.

The air heater 40 may comprise one or more infra-red heating panel (i.e. a radiative heating panel) but could additionally or alternatively comprise an electrical fan heater of conventional type or another convective heater. A skylight 44 (shown in phantom) may be provided in the roof of the compartment 16 so as to allow entry of ambient light into the compartment interior.

A solar panel 46 (shown in phantom) is mounted on the roof of the WC cabin 10. The solar panel is mounted adjacent the skylight 44 in this example, e.g. between two skylights. A plurality of solar panels may be provided depending on the available area for mounting. Solar panels may cover a majority, or all, of the roof area of the cabin. For example, greater than or equal to 70% of the roof area may be cover; preferably, greater than or equal to 80%.

In other examples, one or more skylight is repositioned to avoid impacting on the available roof area for solar panels 46. One or more skylight may be provided between adjacent solar panels, in a void beneath a solar panel and/or in an upper region of a side wall of the cabin, rather than in the roof.

The solar panels may be mounted co-planar with the roof of the cabin normally (i.e. horizontally in use). In some examples, the solar panel(s) could additionally or alternatively be fitted to the side of the outer wall 12.

In some embodiments, the one or more solar panel 46 is angled from the horizontal/roof. The panel 46 may be angled at an optimum angle for solar collection for a particular location. In some embodiments, the solar panel 46 may be mounted via a mechanism to allow adjustment of the angle thereof. As the optimum angle varies due to time of year, the mechanism will be capable of placing the panels at the most efficient angle for a given time. The adjustable mechanism comprises pivot or other rotatable mechanism to provide rotation of the panel 46. For example, the panel(s) 46 can both pivot about a horizontal axis and swivel about a vertical axis. The solar panel(s) 46 may slide out from the roof and/or side walls of the cabin. In some embodiments, the solar panels 46 may fold out from the cabin (e.g. the roof or side walls thereof). Deployed panels 46 may extend beyond the outer footprint or boundary of the cabin (i.e. extends outwardly therefrom). This increases the effective light collection area.

One or more external light 47 is provided on the external side of the outer wall 20 or roof. The external light 47 may have a proximity/movement sensor. Alternatively, the external sensor could be provided separately.

In some embodiments, the cabin comprises a wind power generator. Typically, this comprises a wind turbine, however, it can be appreciated that any suitable arrangement may be provided.

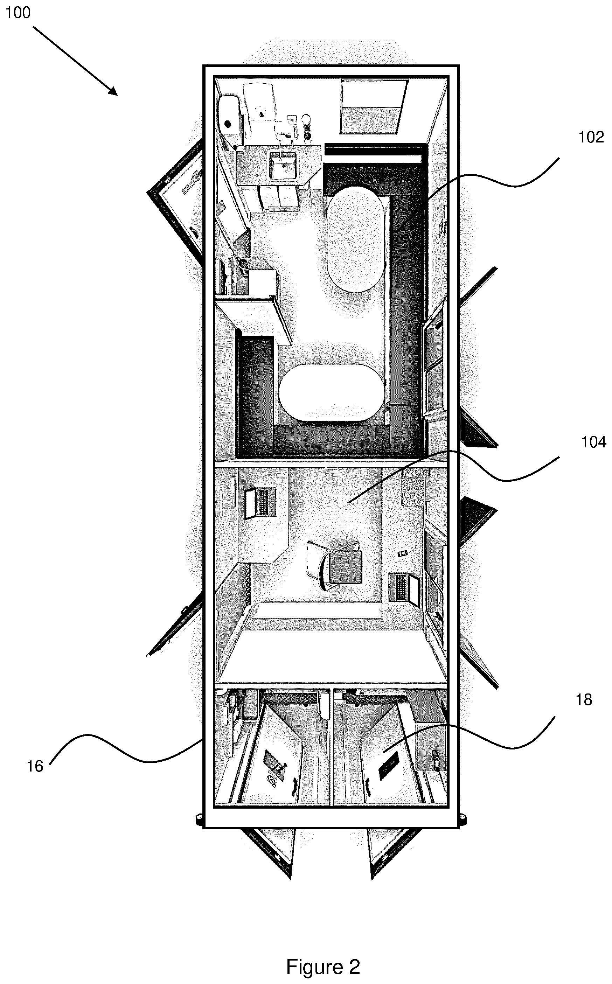

A shown in figure 2, the cabin unit 10 could have further user compartments if desired, e.g. in the form of a larger welfare cabin 100. In this example, the welfare cabin 100 comprises the WC compartment(s) 16 and/or 18 described above at one end of the cabin 100. Instead of providing two WC compartments, the compartment 18 could be used as the equipment compartment 20 described above. Other compartments of the cabin 100 comprise a seating area and/or kitchenette/galley 102 and a separate office 104 in addition to the toilet facilities disclosed herein, each separated by internal walls. Each compartment has an external door and may have windows/shutters. The additional compartment 102 provides further washing facilities, e.g. in the form of a sink and water heater as well as further electrical appliances, such as a cooker/electric hob/microwave oven and/or kettle. Further electrical sockets are provided in the compartments 102 and 104. In some embodiments, the kitchenette may comprise a canteen or seating area. In some embodiments, the cabin comprises a drying room (e.g. to dry wet clothes).

The cabins of Figures 1 and 2 are just examples of the different types of welfare cabins available and it will be understood that a variety of welfare cabin layouts may be accommodated as may be provided to suit different living and working requirements for different numbers of people. The equipment compartment 20 houses the following:
- A generator set 48 (optional);
- An electrical energy store 50, e.g. in the form of a battery or battery bank;
- A fresh water tank 52;
- A waste water tank 54
- A water pump 56;
- A water heater 58; and
- An electrical control system 60

There may additionally be provided an optional fuel-based heater, such as a diesel heater. Whilst the waste water tank 54 is described as being within the equipment compartment 20, it could be located beneath a floor of the WC, e.g. beneath the user and/or equipment compartment.

The generator set 48 may not be needed but may be used depending on the renewable energy generation capacity of the cabin and the level of cabin usage (i.e. the typical electrical system demands of the cabin in use). Where used, the generator set 48 may comprise a fuel-based generator configured to consume/combust/oxidise a consumable fuel to generate electrical power. The generator set 48 is operatively connected to a fuel supply, for example, a self-contained fuel supply, such as a fuel tank or a pressure cylinder. Typically, the generator 48 provides AC power. In some embodiments, the generator 48 may provide DC power (e.g. via a fuel cell). In some embodiments a DC alternator may be used.

In some embodiments, the generator set 48 is a combustion engine generator. For example, the generator set 48 comprises a conventional diesel generator set, and may comprise a diesel engine having an output shaft which drives a rotor of an electrical generator. The electrical generator and motor are typically co-located and/or mounted to a common support structure, such as a chassis/frame. Additionally or alternatively, the generator set 48 may comprise a fuel cell 49. The fuel cell is configured to oxidise a fuel to generate electrical power (i.e. in a direct fashion). For example, the fuel may comprise hydrogen, carbon monoxide, methane, methanol or other conventional fuel cell fuels. The fuel cell 49 may provide a low power output (e.g. less than the engine generator). In different examples, the fuel cell 49 may be provided as an alternative to the combustion engine generator set, or else the renewable engine generator.

The electrical control system 60 comprises a controller provided as one or more processor or logic circuit in communication with the sensors described herein and arranged to output control signals to the various electrical components of the electrical system. The control system 60 is referred to as an intelligent load management system. The electrical control system may also comprise a fuse box, e.g. comprising one or more conventional fuse/trip-switch for selectively denying power to one or more electrical components, e.g. in response to an electrical fault. The control system may further comprise a set of electrical switches under the control of the controller, e.g. switches for each electrical circuit connected to the electrical system. The electrical control system may also comprise one or more power converter, e.g. an inverter for running AC appliances from the energy store, as will be described below.

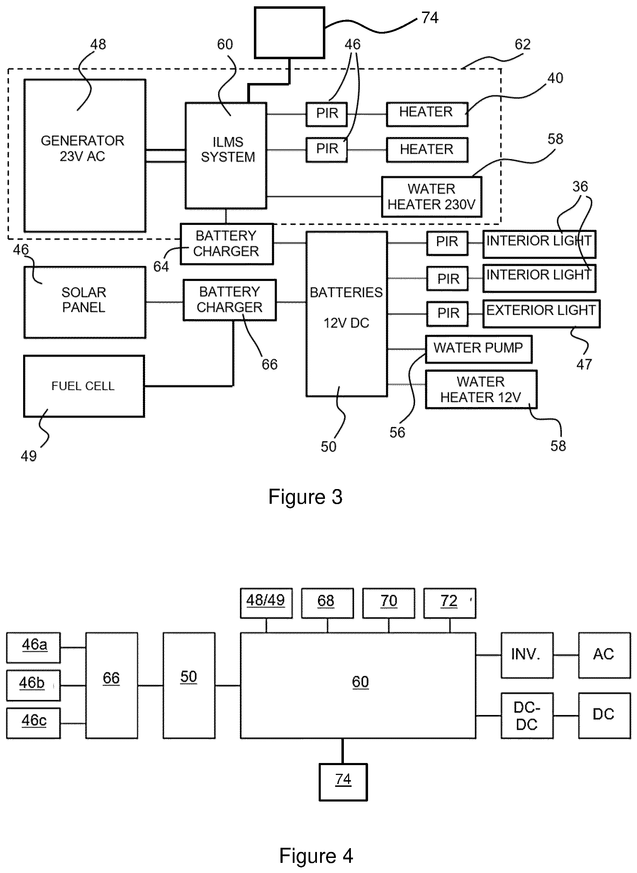

An overview of the electrical system for the cabin 10/100 is shown in Figure 3. The electrical system comprises AC and DC systems/circuits. The AC system is designated by the boundary 62. The AC system comprises the AC generator 48 and an AC-DC converter (e.g. rectifier) 64 that may be provided as part of a battery charger. The AC system could also comprise one or more air heater 40, although this is typically not needed. In general, AC power is provided by the generator.

Where present, one or more wind turbine may form part of the AC system, i.e. generating AC power, and may be connected to the batteries by AC-DC converter 64. Charging of the batteries may be controlled by the controller 60. The wind turbine may also comprise a brake, e.g. under the control of the controller 60, such that generation by the wind turbine can be eased by the controller when the batteries can accept no further charge.

Where present, the fuel cell 49 may form part of the DC system (i.e. the generator set 48 or a portion thereof is operatively connected to the DC system).

The AC system may be a 230V system and/or the DC system may be a 12V, 24V or 48V system. However alternative voltages may be provided to suit local requirements in different countries, e.g. on the understanding that the DC system will be of lower power rating than the AC system.

A DC-AC converter/inverter may also be provided as part of the power control system. In some embodiments, an inverter may be used to covert DC power from the batteries, renewable energy generator and/or fuel cell 49 (where present) to provide power to the AC system.

In the present embodiment, the inverter is "under-rated". The inverter is therefore not sufficiently rated to power all the AC appliances concurrently. For example, the inverter may provide a 3kW output, whereas the sum total of the AC appliances is 10kW. The power rating of the inverter is such that it is sufficient to run the most power-intensive component in the system. The power rating of the inverter may be greater than or equal 1kW; preferably 2kW. The power rating of the inverter may be less than or equal to 5kW.

In various embodiments, the inverter is only selectively activated. For example, the inverter may be powered down entirely, i.e. so that it does not draw power, based on readings of cabin occupancy and/or power demand on the AC circuit.

A water heater 58 may be provided on the AC circuit and/or DC circuit. In this example both an AC and DC water heaters are provided and the controller 60 can switch either/both on/off as required. Those water heaters may allow for different power output, e.g. to permit different rates of heating such as instant and/or longer term hot water heating for a hot water tank. In this regard, the cabin 10 may comprise a hot water tank, i.e. separate to the fresh water tank 52.

Although not shown in the figures, it will be appreciated that a hot water tank, or instant hot water heating system, will comprise a water temperature sensor in communication with the controller 60. The current temperature reading can be used to determine whether the water temperature is acceptable (i.e. to prevent overheating and/or to alter the priority of water heating within the control logic).

The solar panels 46 and battery bank 50 are connected to the DC circuit. DC power is thus generally provided by the battery 50. The DC output of the solar panel 46 can be used to charge the battery 50 via a battery charger 66. The battery charger 66 comprises a charge controller, e.g. to monitor the level of charge on the battery and selectively disconnect the battery when a maximum charge level is reached. The battery charger 66 may optionally comprise a DC-to-DC converter/regulator.

The appliances connected to the battery on the DC circuit comprise: the interior 36 and/or exterior 47 light(s); the water pump 56; DC sockets (such as USB/charging sockets); and, optionally, a DC water heater or DC generator if used.

In the example of Figure 3, each of the lighting and space/air heating appliances could be controlled at least in part in accordance with the output of the one or more motion/proximity sensor 46. Each appliance is shown in Figure 3 schematically as being connected to the system via a PID sensor.

In some embodiments, one or more instantaneous water heater(s) is provided for the wash basins or sinks 28. An individual electrical water heater may be provided for each sink 28 in the cabin. In other embodiments, an electric heated water storage tank may be fitted in order to provide the hot water for the hand wash sink(s) 28. The sink 28 is fitted with non-concussive taps 30 so that water usage is kept to a minimum. The hot water tank would be managed by the controller 60 so that it is kept topped up and only heated when necessary. A water level and/or temperature sensor may be provided in communication with the controller 60 for this purpose. The control system may be configured to prevent frost damage, e.g. by monitoring water temperature against a minimum threshold temperature (i.e. above freezing) and using a small amount of power to maintain a temperature within the water system.

The system may detect whether a user (e.g. a person) is inside the cabin. For example, the cabin may comprise an infra-red sensor. If a user is not within the cabin, then the water heater may be deactivated to save energy. The heater may be deactivated after a predetermined period of time. For example, the heater may be deactivated after 1 minute, 5 minutes, 10 minutes, 30 minutes, or 60 minutes. When a user enters the cabin, the heater is re-activated accordingly.

The pressure for the water taps may be provided by an accumulator to store pressure. When the pressure drops the control system 60 will run the water pump 56 until the pressure reaches the desired level. A water pressure sensor may be provided in communication with the controller 60 for this purpose.

The toilet 32 flush system uses a small amount of water per flush. This reduces the waste tank 54 capacity required, e.g. to prolong a duration between servicing. The water pump only runs when required by the toilet flush or to top up the water tank or accumulator. The water pump may be deactivated as described in relation to the water heater.

In some embodiments, the cabin is configured to collect rainwater. The cabin comprises a system to collect rainwater from the roof. Typically, the roof is sloped or otherwise angled such that rainwater flows toward one or more collectors. The water may then be stored and/or integrated into the water system as described above (e.g. in the fresh water tank 52). The system may use a guttering/downpipe arrangement, or the collector could be integrated into the roof. The rain water may be processed to at least partially render the water safe for use (e.g. may not provide drinking water, but water suitable for washing etc.). The decontamination system may comprise one or more of: a filter (e.g. particulate and/or reverse osmosis); a chemical filtration/biocidal system; UV biocidal system; bacterial membrane filter; or other suitable mechanism. In some embodiments, the water may be sufficiently processed to provide potable water. Processed water may then be deposited into the water tank 52.

Any excess water (i.e. water that cannot be adequately stored or processed) may be discarded. Typically, the system is configured such that excess water will overflow the collector and either collects on the roof or is discharged onto the ground.

The cabin may comprise a "grey water" system. The grey water system collects water that is used by one system and uses the same water to provide for a second system. For example, water collected from one or more sinks in the cabin (in the WC or kitchen). The water is stored in a grey water tank. The grey water may then used to flush the toilet instead of using freshwater from the tank.

The grey water tank is fitted with sensors to determine the level of water therein. If the level drops below a predetermined threshold, water from the freshwater tank is introduced into the grey water tank. Water from freshwater tank may increase until the water level reaches a "high level". The "high level" volume is set such there is still some available capacity in the freshwater tank from future hand washing (i.e. the system ensures sufficient water remains in the freshwater tank). The grey water tank is fitted with an overflow that feeds directly into the waste tank for when there is more water collected (e.g. from handwashing) than is required (e.g. to flush the toilet for prolonged periods).

The lighting inside the cabin is low voltage DC LED lighting consuming minimal power, it is controlled so that it only illuminates when there is someone present (according to the output of sensor 38 or a door opening sensor) and there is insufficient natural light (according to a comparison of the output of sensor 42 with a minimum threshold value of ambient light). The control system may also switch off the internal light after a set time of operation to conserve energy, e.g. a period for which the presence of a person within the cabin is not detected.

The external lighting is low voltage DC LED lighting consuming minimal power, it is controlled so that it only illuminates when there is someone present and there is insufficient natural light (i.e. determined according to the relevant sensor outputs in a manner akin to the internal lighting control). The control system also turns it off after a set time to conserve energy.

Personnel/space heating is controlled so that it only operates when the ambient temperature is below a predetermined threshold and someone is present. Thus an ambient temperature sensor may be provided inside the cabin and may be used by the control system in conjunction with one or more personnel sensor described herein to control operation of the heater 40 automatically. The heating will turn off once there is no longer anyone present in the cabin. The heating can be DC or AC (e.g. 12V or 230V). If the heating is 230V the power could be provided from the DC energy store via an inverter for a more-limited period of time. The heating may be provided by an electric, resistive element (e.g. including a fan) heater or infra-red heating panels. An electric heat exchanger style air heater may be used, e.g. akin to air conditioning units due to its potential efficiency. This could run from the battery. In some examples, a diesel powered heater could be used, e.g. in conjunction with a particulate filter in the exhaust path to mitigate emissions.

In use, the power for the electrical system is stored in the batteries 50, which are charged up predominantly by the solar panel(s) 46 and/or wind turbine(s), e.g. fitted to the roof and/or side of the WC cabin 10. The batteries are most likely Lithium-ion batteries, but lead acid or gel batteries may be used in the same way only with a reduced power density. Any conventional electrical energy store could be used.

If for any reason the battery charge level drops too low the load is switched off by the controller 60 to prevent the batteries being deep discharged. A dedicated load shedder could be fitted to the batteries in other examples, if desired.

The charge on the battery 50 is used to power the electrical system. The system can operate for extended periods of time via the battery bank 50 alone, i.e. being charged by the available renewable energy generator. This is best shown in Figure 4, where the connection of the different components into the control system 60 is shown. Different renewable energy sources, designated as solar panel(s) 46a, wind turbine(s) 46b and hydropower 46c can be connected to the battery pack 50 each by a suitable charge controller 66.

The control system 60 monitors the charge level on the battery pack 50 and controls delivery of power to the AC and/or DC circuits. The control system 60 monitors the load on the AC and/or DC circuits and operates according to control algorithms as will be described below.

The electrical system is managed with an intelligent load management system that is configured so that when more appliances are being asked to run than there is available power (e.g. based on current and/or predicted energy store levels) then the load management system may limit the maximum power supply to the electrical system. To this end, the appliances may be supplied/denied power in order of a specified priority.

The control system 60 comprises a microprocessor, such as a programmable circuit board or programmable logic device. In any examples of the invention, the battery or other electrical energy store may comprise one or more sensor indicating the current level of charge and/or available capacity for energy storage. The sensor output is communicated to the controller such that it can be accommodated in power supply decisions made by the controller.

The controller in presently preferred embodiments is pre-programmed with a prioritisation algorithm which dictates a preferential supply of power to certain appliances over others.

Each electrical load/appliance may thus be given a ranking of 1-n, where 'n' is the number of electrical appliances connected to the electrical system. Using this technique, each appliance has a ranking that can be used to determine which appliance(s) should be powered in the event that it is not possible to supply power to meet all the instantaneous or planned electrical loads on the system. Appliances may be managed generally by the controller in the various orders of priority, such as:
- Interior lighting
- Water heating (e.g. instantaneous or storage vessel)
- Kettle/microwave or other cooking appliance
- Air heating
- Refrigerator
- Power sockets, which may be low power (e.g. USB) and/or high power.
- Sterilization water filter (e.g. UV filter)
- Hand drier and/or air dryer
- Pump for the water system

Different hierarchies can be drawn up according to the intended use of the cabin.

The controller 60 comprises one or more routine/algorithm to determine whether the level of charge on the battery and the concurrent power suppled form the renewable energy source is sufficient to meet the electrical demand on the system. The control system may check the instantaneous power supplied by the renewable energy source(s) 46 to determine whether the demands of the concurrent electrical loads on the system can be met by the combined power supplied by the renewable generator(s).

The controller 60 may monitor the current rate of charge on the battery and the current rate of discharge from the battery to meet the electrical demands of the connected appliances. Thus rather than monitoring the renewable energy generator(s) output per se, the controller could simply monitor the charge level on the battery and/or the rate of charge/discharge from the battery. In this regard, the controller may only need to receive the relevant sensor inputs (being indicative the appliances to be activated) and the level of charge on the battery in order to make instantaneous power supply decisions.

This provides a simple but highly effective and efficient control strategy. In a simple example, this may involve monitoring the rate of depletion of the charge on the battery 50 and sending an alert signal or denying power to certain appliances whenever the charge on the battery 50 drops below a minimum threshold and/or the rate of depletion in charge level on the battery is greater than a maximum threshold.

The electrical system is configured to ensure the power drawn through the inverter is less than or equal to the rated power (i.e. to prevent overloading thereof). In the event the total power demand through the inverter (e.g. on the AC circuit) exceeds the power rating thereof, the system is configured to selectively deny power to one or more appliance such that the power demand is less than or equal to the power rating of the inverter. Additionally or alternatively, the controller may selectively start a generator or backup power source to supply power without the need to prevent exceeding the rated power of the inverter, The system may operate in a similar fashion to described above and like features will not be repeated for the sake of brevity.

Each appliance is assigned a priority rating. The system is configured such a lower priority appliance is selectively denied power over a relatively higher priority appliance. Further appliances may be selectively denied power until the demand is less than or equal to the rated power.

In some embodiments, the power demand through the inverted may be reduced to a set point (i.e. threshold) below the rated power. This may help to protect the inverter from being over-powered, for example, during a power fluctuation. The set-point may be 80%; 90% or 95% of the rated power of the inverter.

Power to or through the inverter may be reduced or prevented (i.e. the inverter may be electrically isolated in one or more conditions. The conditions may include where a user is not detected within the cabin. This helps to reduce power consumption. The system may operate insubstantially the same way as the as the water heater system previously described. The cabin may comprise infrared or other suitable motion sensors. Power to the inverter may be reduced/prevented after a predetermined period of time. For example, the inverter may be deactivated after 1 minute, 5 minutes, 10 minutes, 30 minutes, or 60 minutes. When a user enters the cabin, the inverter is re-activated accordingly.

A similar regime may apply to one or more appliances in the cabin. The appliances may be deactivated according to a priority ranking. In some embodiments, only a select portion of the appliances are deactivated (e.g. appliances that are not need when a user is not present). For example, lights, heater and/or power sockets may be deactivated. In some embodiments, all the appliances may be deactivated. All the appliances may be deactivated after a predetermined period of time (e.g. after 1 hour of no occupancy) indicative of an end of a working day or other working period (e.g. overnight). In some embodiments, the appliances may include any monitoring and/or control system (e.g. for the electrical and/or water system). The system as a whole therefore only operates the minimum number of appliances/systems required to reactivated the system or other appliances.

Isolation of the inverter may be performed using a controller comprising one or more of: a relay; a current sensing relay; a programmable logic circuit (PLC); and/or artificial intelligence system. The controller may be integral with the inverter and/or form part of an overall power management system.

A predictive capability is added to the control system 60 to better manage peaks and troughs of renewable energy supply against the peaks and troughs of electrical system demand. In general terms, this is achieved through:
(1) profiling of electrical demands for the system as a whole and/or individual electrical alliances; and,
(2) receiving forecasts of environmental conditions that affect renewable energy generation.

The profiling of electrical demands, at least in part, takes the form of scheduling periods of usage and non-usage of the cabin. When a cabin is deployed to a site, or in advance of a planned deployment, an operator may input the intended operational schedule for the cabin in terms of working and non-working days and/or the hours of each working day for which the cabin is to be used. The operational schedule preferably extends at least 1, 2, 3 or 4 weeks into the future such that there is a predictable plan for cabin usage.

Even using this basic information an initial profile of energy usage for the cabin can be implemented based on historic knowledge of similar cabin types or the same cabin used in different/previous locations. For example, a basic or generic profile of power consumption by the cabin electrical system as a whole can be established by the control system showing a non-constant power usage over the working day (usage hours) and/or a minimal power consumption over non-usage time periods. For example, power usage during working hours may show initial peaks at the start of a shift and during break/meal times as well as an ongoing background usage for lighting, space heating, water pump, water heating, hand drying, etc.

The number of cabin occupants may be input during setup to contribute to the predicted power consumption profile. A greater number of occupants may imply more frequent use of certain appliances and/or a larger number of concurrent electrical appliances in use.

The number and type of electrical appliances making up the electrical system (e.g. AC and/or DC appliances) may also be logged by the control system, along with the associated power rating. The overall electrical system demand can be constructed from the summation of the individual power profiles of the electrical appliances on the system. An example is shown below, which includes the days and hours of use along with the associated electrical appliance hierarchy and normal usage data:
1 **Days and hours of use**

| | MON | TUE | WED | THU | FRI | SAT | SUN |
|---|---|---|---|---|---|---|---|
| Start | 08:00:00 | 08:00:00 | 08:00:00 | 08:00:00 | 08:00:00 | 08:00:00 | 08:00:00 |
| End | 17:00:00 | 17:00:00 | 17:00:00 | 17:00:00 | 17:00:00 | 16:00:00 | 13:00:00 |
| Hours | 09:00:00 | 09:00:00 | 09:00:00 | 09:00:00 | 09:00:00 | 08:00:00 | 05:00:00 |

**2 Appliance list**

| Priority No. | Appliance Name | Power rating | Hours use per day |
|---|---|---|---|
| | | kW | Hours |
| 1 | Interior lighting | 0.25 | 12 |
| 2 | Hot wash - Toilet | 3.00 | 0.5 |
| 3 | Hand dryer | 0.20 | 0.5 |
| 4 | Hot wash - Canteen | 3.00 | 0.5 |
| 5 | Kettle | 2.20 | 0.5 |
| 6 | Microwave | 1.00 | 1 |
| 7 | Office socket - Laptop | 0.25 | 8 |
| 8 | Office socket - Printer | 0.80 | 0.5 |
| 9 | Exterior lighting | 0.25 | 2 |
| 10 | USB sockets | 0.20 | 1 |

Using this information, the controller can move away from a simple instantaneous control logic to a predictive control logic that aims to satisfy the power requirements for a scheduled time period, such as a period of one or more days. The controller may aim to satisfy a rolling time period of a plurality of days such as two, three, four, five or more days. Predictive scheduling for a time period of two or more days allows better accommodation for the varying day-night cycle of renewable energy generation.

The individual electrical appliance profiles, and/or the total electrical system profile, may be plotted on a timeline.

The controller 60 is thus programmable to recurring schedules or other predictable or cyclic events/behaviour. For example schedules may be used to follow trends in energy consumption and/or renewable energy availability. Daily, weekly, monthly and/or seasonal schedules may be used. For example, it may be assumed that the cabin may not be used overnight or at weekends in some instances of use and so a low level of charge on the battery may be sufficient. However scheduling of energy consumption may imply that high levels of energy consumption are expected during the working hours of a morning/afternoon. As such the renewable energy generator(s) may be sufficient to top up the battery over a weekend, implying that the generator set is not required to be used merely because a low charge level exists on the battery at the start of a weekend.

Environmental condition forecast data may be received by the control system through a suitable subscription service, e.g. via an API. The environmental condition data may be specific to a given location (e.g. GPS location) of the cabin on-site. The data may comprise any, or any combination of: daylight hours; ambient temperature; ambient light level (sunlight/cloud-cover); precipitation/humidity data; and/or wind speed.

The location of the cabin (latitude and longitude) may be manually entered or else may be tracked by the control system, e.g. via GPS, and sent to the subscription service to obtain data applicable to the current cabin location.

For a predetermined time period the controller can thus take the current level of charge on the battery bank 50 and can plot both the supply to the battery as well as the demand/drain from the battery using the combination of renewable energy generation profile and the energy system demand profile described above. The controller can thus determine whether a minimal battery charge threshold will be met at any time during the predetermined period.

If the scheduling process by the controller reveals that all predicted energy demands can be met by the renewable energy generation, the controller may enact a normal scheme of operation for the electrical system in which power is supplied to all electrical appliances when needed.

In the event that the controller determines that the battery will discharge to an unacceptable level (i.e. beyond a minimum threshold) at one or more point during the scheduled time period, the controller may determine the level of intervention needed to avoid crossing the relevant threshold. This may involve denying power to one or more electrical appliance for a period of time according to the control hierarchy.

Where the charge on the battery pack is insufficient, any backup power source 48, 68, 70, 72 could be connected/used to supply power to the system. Those backup options comprise an internal generator set 48, external generator set 68, grid power supply 70 and/or external battery pack 72. Any, any combination, or all backup options could be used where needed, although in many examples, e.g. in systems where fewer or lower-power electrical appliances are used, the backup options could be negated altogether, or used in an ad-hoc fashion where an alert is sent out by the control system 60.

The control system 60 monitors and manages the battery charge level and, if insufficient charge is created from the renewable energy sources, then the batteries 50 can be topped up with power from the backup source. If the battery charge level drops below a certain level (i.e. a minimum threshold) the backup source can automatically be switched on and operated until the batteries are sufficiently/fully charged.

AC power may be provided through the use of a small diesel generator 48 (where used) so that fuel usage is kept as low as possible. This will result in the generator being unable to power all the connected appliances concurrently (e.g. the space heater(s) 40, water heater 56 and/or battery charger), ensuring that the generator 48 is not run in low loading scenarios that could lead to coking issues over time.

When scheduling power denial to electrical appliances according to the control hierarchy, it is to be noted that the hierarchy may not be static. That is to say each appliance hierarchy may be a variable that follows a hierarchy profile based on one or more condition. Interior or exterior lighting for the cabin may have a higher priority level during night time and a lower priority level during daylight hours or sufficient ambient light levels. Cooking facilities may have a higher priority level during break/meal times and a lower priority level during core working hours. Various different priority level profiles are different for different appliances.

The hierarchy may be implemented by rank ordering of electrical appliances or else by scoring of the priority level.

When denying power to appliances, the controller may apply a maximum power saving scheme (e.g. using a power rating hierarchy) and/or a human necessity prioritisation scheme (e.g. using a health and safety hierarchy). Certain health and safety risks will typically be deemed critical such that certain appliances must be powered for the electrical system and cabin to remain in operation.

Use of scheduling of energy consumption and/or renewable energy availability may further increase the efficiency of the system. Scheduling may be pre-programmed at least in part, e.g. requiring an operator to input the intended days/hours of cabin usage on site to set the system and/or relying on predictable environmental data such as daylight hours and/or ambient temperature. Additionally or alternatively, scheduling may be adaptive, e.g. based on records of energy consumption and/or environmental data in a preceding usage period.

The system also allows for numerous improved reporting and control options for the user/operator. In any examples of the invention, the system controller 60, or another data controller of the system, may transmit data relating to the cabin electrical system to a display of a user interface 74 and/or a remote server or facility for access by individual users.

The data may be accessed or transmitted to users of the onboard user interface 74 for normal operation of the welfare cabin. The data may be transmitted to a remote server for users having management/monitoring privileges. Such users may access the data and information/reports using any suitable conventional computing devices, such as PCs, laptops/tablets, mobile phones, and the like.

The controller 60 is thus connected to a user interface 74 in accordance with the invention via a wired or wireless communication connection so that the user can appreciate certain attributes of the intelligent control system that are affecting normal use of the appliances. The user interface 74 therefore comprises a display screen to present the relevant information at the appropriate time to the user. The user interface also comprises input means whereby the user can specify user intentions or commands, e.g. including switching appliances on/off. The user input means could comprise any suitable form, e.g. such as buttons, switches, joystick or other tactile or gesture-based means. In the current example, the input means and display are one and the same, e.g. as a touchscreen. The user interface also comprises a processor for controlling output on the display and receiving input commands from the user.

The controller 60 sends data to the user interface 74 for display of information (e.g. status information) to the user which may comprise one or more of:
- A battery charge level and/or charging/discharging rate.
- Whether one or more appliance is currently receiving power.
- Whether one or more appliance of the system is denied power.
- Power generated by the renewable generator and/or fuel generator.
- Current charge level of the energy store.
- Fuel generator condition/operating parameters (e.g. RPM) and/or fault information.
- Power usage on the AC and/or DC circuit.
- Water levels and/or water usage in the freshwater, waste and/or greywater tank.
- Fuel level and/or fuel usage.
- Electrical diagnostics and/or conditions of the system.

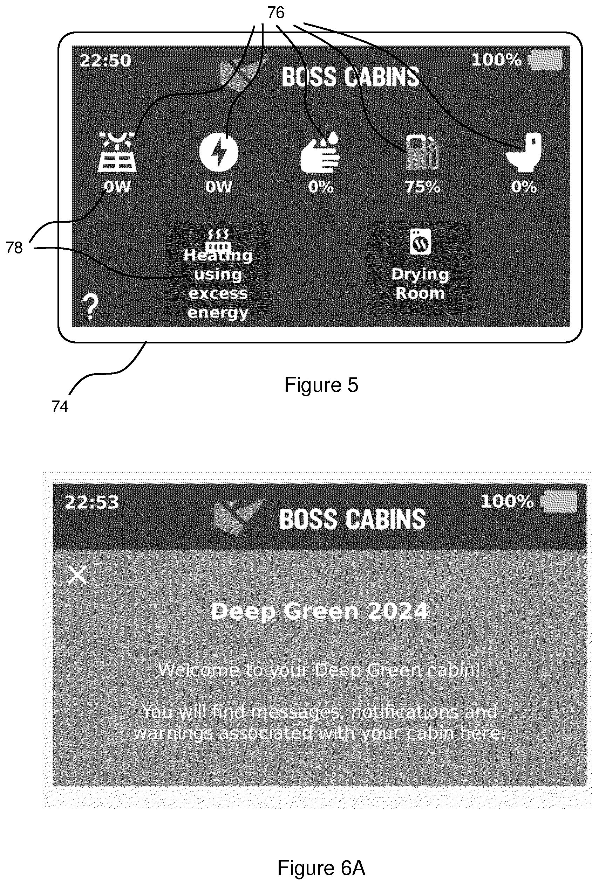

An example user interface 74 is shown in Figure 5. The specific display shown is a home screen showing usage/operation information of key appliances and consumables for the welfare cabin. The display may be inactive or blank when not in use. The user interface may power the display to present information to the user upon operation of the user interface. In other examples, the display may be powered when the cabin is occupied (i.e. based on the output of the occupation sensor) or may be powered continuously.

The controller 60 receives operational data for all appliances connected to the electrical system and the associated operational condition(s) based on one or more sensor output as hereinbefore described. The controller 60 sends relevant data to the user interface for communicating the appliance status and any associated conditions to a user. This information is presented to the user using the display, e.g. as shown in Figures 5-6.

In Figure 5 it can be seen that a plurality of graphical indicia 76, e.g. in the form of icons or the like, are provided on the display of the user interface 74. The graphical indica 76 each represent an appliance onboard the welfare cabin, a generator 46, 48 or 49 and/or a store of an onboard consumable such as energy store 50 or a water tank. In the example shown, one of the appliances is a space heater of an onboard clothes drying room, although any of the appliances described herein may be represented.

Accompanying each graphical indicia on the display is status information 78. This status information 78 is determined by the data processed by the controller 60 and is therefore updated during use of the cabin electrical system, e.g. in real time.

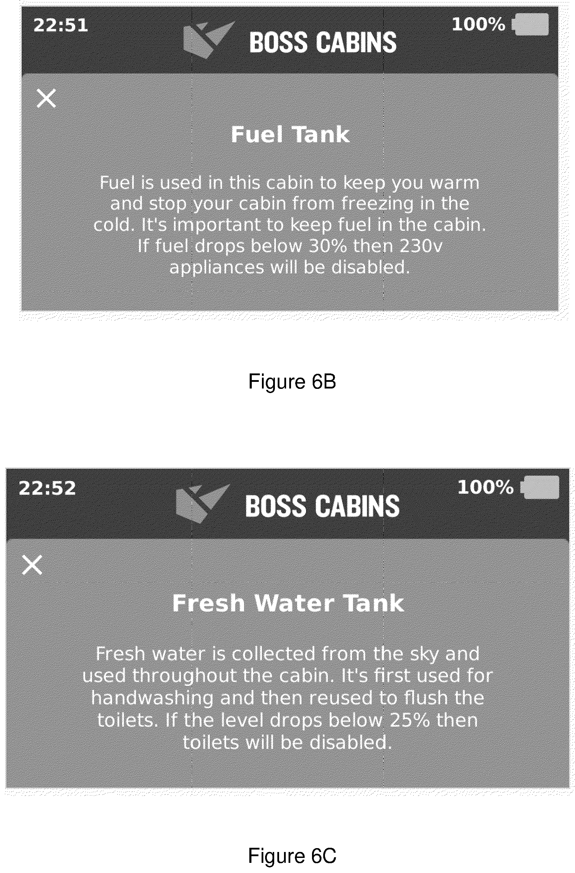

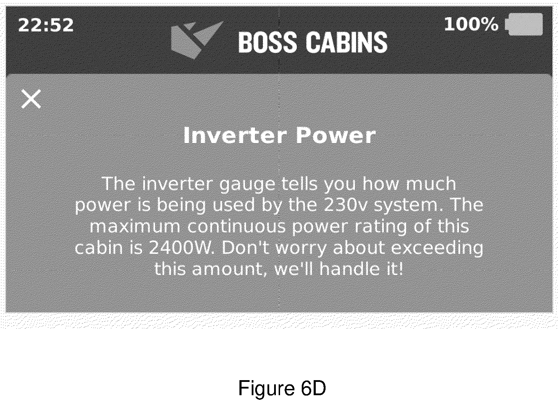

As well as the status information described above, the user interface can present a variety of other operational information for the benefit of the user. Examples are shown in Figures 6A-6D. Some information is general in nature as shown in Figure 6A and may concern the general operation of the electrical system or cabin or the user interface itself.

Certain information presented to the user may comprise condition information for an appliance or other element of the system described herein. Examples are shown in Figures 6B-6D, where a specific information about an appliance is provided including one or more condition of its operation. The condition information may include a threshold, e.g. a threshold for one or more operational parameter associated with the appliance to permit/deny operation of the appliance by the controller 60. These conditions therefore relate to operational parameters monitored by the controller, e.g. using the sensor outputs of the electrical system. The condition thus concerns a condition/threshold used by the control logic of the controller.

The display allows a user to understand the operation of the electrical system in greater detail than has been hitherto possible. However, there is a significant amount of information that could be presented to the user, whereas the user's interest in such information will typically be limited to a specific immediate task or instance of use of one or more appliance onboard. Therefore the inventor has devised a system whereby conditional information for a component of the electrical system, such as an appliance, can be presented to the user upon specific interaction with the user interface for a purpose that is operationally linked to the conditional information.

As well as the general status information shown to the user in Figure 5, the user can interact with the user interface to input commands to the electrical system. Typically the user will use the user interface 74 to turn on/off one or more appliance. The user may select the graphical indica representing the appliance, e.g. by touching/tapping the icon, to toggle the appliance on/off. This may act like a switch, and the controller may turn on/off the appliance based on the user command input.

However, unlike a simple switch, the user command must also comply with the control logic of the controller 60 in order for the command to be implemented. Therefore the controller 60 has the ability to enact or refuse the controller command prior to its implementation. In either event (enact or refuse), the user interface 74 may display conditional information associated with the appliance/command, e.g. in response to the user command. In this way, the user can appreciate if/why a command is denied by the controller at the point the command is input. If a command is enacted, the user may also be alerted to a condition that may restrict ongoing use of the appliance, e.g. a condition that may cause operation of the appliance to cease during the instance of use.

A simple example for the display of Figure 5 is the initiation of the drying room by the user. The drying room will consume significant energy to generate the required heating. If there is insufficient energy available, e.g. based on the charge level of the batteries and/or the energy consumption of more important electrical devices in the hierarchy, then the controller 60 may deny the user command and can inform the user of the relevant condition that prevents operation of the drying room. This represents an instantaneous decision and presentation of the associated information. However, in another scenario, there may be sufficient anergy available to initiate heating in the drying room but it may be that the schedule for the cabin indicates that insufficient energy may be available to complete a full duration of a clothes drying operation, e.g. say for 2 hours or more. In such a scenario, the controller 60 may initiate the operation but may present information on the one or more condition that may conflict with the ongoing operation.

The condition presented to the user may comprise a threshold of energy available from the charge on the energy store, fuel in the fuel tank, a threshold for total energy consumption per day, and/or a status of one or more further appliance.

Therefore it will be appreciated that the user will see conditions that are relevant to the input command. Based on this information, the user may or may not proceed with the intended appliance use. Additionally or alternatively, the user may have the opportunity to alter some other aspect of the electrical system operation in order to enable the command to be enacted. For example, if a desire to use cooking facilities is being prevented by an energy consumption threshold and operation of another heating appliance, the user may elect to cease operation of the other appliance using the user interface and then reaffirm the command to power the cooking facilities. Once the conflicting condition is manually removed by the user, the controller 60 can enact the desired command.

It is to be noted that there are some conditions for which the user will not have control, e.g. conditions that affect fundamental operational or health-and-safety requirements of the cabin.

A management/administration profile for the user interface (or an associated remote device) may be used to set and/or modify one or more parameter/threshold (i.e. setting or condition) on the system. The parameter/threshold may comprise one or more of:
- An upper and/or lower threshold for the battery charge level on which the fuel generator is deactivated/activated.
- A "quiet" time period when the generator is prevented activating (e.g. to reduce excessive noise).
- An upper and/or lower threshold for any of the water, waste or fuel tank level.
- The geofence location/area in which the cabin is operational
- The inverter power-rating threshold level.
- The heat/inverter deactivation time after a user is not detected.
- The battery temperature threshold point/range (i.e. the point at which the heating/or cooling activated/deactivated).
- The priority rating of an appliance.
- Criteria for notifications/alarms and/or users who alarms/notifications are sent to.

The administrator/management profile may be used to issue one or more command to the system, for example:
- To activate/deactivate one or more generator (e.g. the solar generator or fuel generator). For example, the fuel generator may be deactivated such that the system uses battery only (e.g. until the battery is completely depleted).
- To activate/deactivate the inverter and/or water heater.
- To activate/deactivate one or more appliance,
- To stow/deploy the solar generator.

A few examples of features of the dynamic user interface system are set out below to help explain its usefulness in a more efficient/green cabin implementation:
- General energy consumption information for the overall cain can be reported to the users so they appreciate the overall aim to reduce unnecessary consumption
- When fuel is running low the screen will warm the user that refuelling is required otherwise power will be cutoff when fuel gets too low, to preserve energy as to prevent frost on essential components of the system (e.g. battery) in cold conditions.
- As power levels decline, we will cut the power to low power sockets to prevent abuse and reduce consumption levels.
- The touch screen can be used to activate everything in the cabin including hydraulic isolation, heating, and external light isolation for transport purposes.
- The display may be able to output predicted renewable energy generation (e.g. based on sunlight hours and /or shading) thereby informing the user of predicted energy availability for one or more purposes.
- The system may notify the remote device when a user is detected and/or when an absence of a user is determined, e.g. whether the water heater and/or inverter is powered down due to the absence of the user. This may allow better monitoring for security, e.g. to identify/prevent unauthorised cabin use.
- Usage of the battery (e.g. charging/discharging) may be prevented altogether if the temperature of the battery is below a predetermined temperature. The temperature may be less than or equal to 5°C, 2°C, or 0°C.
- Heating and/or cooling system may only be used in selective conditions based on ambient temperature and/or an availability of excess renewable energy.

The control system described herein is better able to manage the power harvested from renewable sources and its use. It can manage power outputs so that the power storage system is never fully depleted, or only depleted if a manual override is activated due to the user having means of recharging the system from a backup source.

Depending on the calculated battery levels over the next x number of days the controller may restrict certain appliances from running in order to save the power for the more critical appliances and ensure the batteries do not get completely depleted. In the case of a welfare cabin items that will be switched off first will be ones that are not required by law for the site to run.

The control system may also allow more optimal/efficient use of the available renewable energy generation capacity. For example, the controller may allow the energy reserves in the batteries to become depleted to a greater extent if it can be forecast that there will be sufficient renewable energy generation capacity in time for the next instance of use. This can avoid renewable energy generation capacity being wasted, e.g. once the batteries are already fully charged.

The system monitoring system can log the usage of all the appliances fitted in the cabin. The admin/manager would then know the frequency, the duration and the time and day of each appliance being used. Any suitable report of compliance could be generated. Also the system can be used to log faults quickly due to changes in operation of appliances.

Alongside the function of the above system in facilitating load balancing for the cabin, the user interface can allow one or more useful functions, including: an information repository on cabin operation (i.e. a user manual); allowing a user to isolate individual appliances or the cabin as a whole (e.g. during repair, replacement, or moving of the cabin); switching between different onboard power sources; switching to an external power source (e.g. connecting to a mains power source or an external generator, where available.

## Claims

1. A self-contained welfare cabin having an electrical system comprising:
an energy store;
an electrical energy generator;
a plurality of appliances connected to the electrical system to be powered in use by the energy store and/or electrical energy generator;
a control system arranged to selectively deny power to one or more appliance based on a predetermined control scheme; and,
a user interface onboard the welfare cabin, the user interface comprising a display and an input device for specifying a power demand for one or more of the appliances, wherein the control system outputs to the user interface status information for the one or more appliance being denied power by the control system and the display displays a status of the one or more appliance to a user.

2. The welfare cabin of claim 1, wherein user interface comprises a touchscreen display, wherein the user can interact with the display such that the display acts as the input device and the display outputs an indication of one or more appliance on screen.

3. The welfare cabin of claim 1 or 2 the power demand specified using the user interface is a power on or power off demand for the one or more appliance.

4. The welfare cabin of any preceding claim, wherein the control system comprises a controller and the specified power demand for the one or more appliance is communicated to the controller from the user interface, the controller determining whether or not to implement the specified power demand according to a predetermined control scheme.

5. The welfare cabin of claim 4, wherein the controller controls output of a power denied or power supplied status for one or more appliance on the display in response to the input of the power demand via the user interface.

6. The welfare cabin of any preceding claim, comprising one or more sensor for monitoring an operational parameter associated with the one or more appliance, the control system receiving the output of the one or more sensor.

7. The welfare cabin of any preceding claim, wherein the control system monitors one or more condition associated with the status of the one or more appliance and communicates to the user interface the one or more condition associated with the power demand upon interaction with the input device.

8. The welfare cabin of claim 7, wherein the condition is a condition of the predetermined control scheme/logic comprising one or more of: a total power demand for the electrical system; a charge status of the energy store; a power threshold; an active or inactive status of one or more further appliance; an ambient condition; a time of day or day of the week; and/or an occupancy status of the cabin.

9. The welfare cabin of claim 7 or 8, wherein the display displays in response to a power demand specified by the user via the input device both the status of the appliance and also one or more of:
the condition associated with that status; and
an indication of how to alter the status of the appliance by modifying the condition associated with the status.

10. The welfare cabin of any one of claims 7 to 9, wherein the condition is time-sensitive and the control system outputs to the user interface a duration for which the condition will apply.

11. The welfare cabin of any preceding claim, wherein the control system operates according to a control scheme comprising a hierarchy of appliances wherein one appliance is selectively denied power in favour of another appliance according to their relative positions in the hierarchy.

12. The welfare cabin according to claim 11, wherein the total power drawn by the electrical system is limited by the control system, and the control system refers to the hierarchy to determine which appliance to deny power in order not to exceed said limit.

13. The welfare cabin according to any preceding claim, wherein the electrical energy generator comprises a renewable energy generator for charging the energy store, the control system monitoring the power output of the renewable energy generator.

14. The welfare cabin according to any preceding claim, wherein the control system monitors the charge level on the energy store and/or the rate of charge/discharge of the energy store and compares it to a threshold value, the control system selectively denying power to one or more appliance in order to adhere to said one or more threshold value.

15. A welfare cabin controller comprising one or more processor arranged to operate according to machine readable instructions so as to:
monitor the operational status of an energy store, an electrical energy generator and a plurality of appliances connected to an electrical system of the welfare cabin so as to be powered in use by the energy store and/or electrical energy generator;
selectively deny power to one or more appliance based on a predetermined control scheme; and,
communicate with a user interface onboard the welfare cabin, comprising
receiving power demands input by users via the user interface, said power demands specifying one or more appliance to be supplied power; and
output to the user interface status information for the one or more appliance being denied power for displaying to the user a status of the one or more appliance to a user upon interaction with the input device.
